# EUROPEAN PATENT APPLICATION

(11) **EP 2 002 767 A1**
(43) Date of publication of application: **17.12.2008**
(21) Application number: 08103066.0
(22) Date of filing: 28.03.2008
(51) Int. Cl.: A47J 36/02, G01K 11/12

(54) **Container for cooking food and a procedure for manufacturing means for checking the temperature of the container**

(30) Priority: 13.06.2007 IT PR20070041
(71) Applicant: I.L.L.A. S.p.A., 43013 Langhirano (PR) (IT)
(72) Inventor: Zanlari, Gianfranco, 43100 PARMA (IT)
(74) Representative: Gotra, Stefano

(57) **Abstract**

A container for food characterised in that the container comprises on its upper edge (4):
- a first layer (5) of pigment or paint;
- a second layer (6) of thermo-chromatic pigment or paint on top of the first layer (5) where the second layer is of a type that becomes transparent allowing the colour of the first layer (5) underneath to be seen whenever temperature of the edge (4) exceeds a preset threshold.

The procedure has the following steps:
- application of a first layer (5) of pigment or paint on the upper edge (4) of the container;
- passivation and, where necessary, stoving;
- application of a second layer (6) of thermo-chromatic pigment or paint on the first layer
- passivation and, where necessary, stoving;
- application, where required, of a third layer (7) of protective pigment or paint on top of the second layer (6) followed by passivation and, where necessary, stoving.

## Description

The present invention comprises a container for cooking food and a procedure for manufacturing means for checking the temperature of the container.

Patents EP 1726933, US 7112765, US 2005/0103209 and US 2006/0049186 describe containers for cooking food of a known type such as frying pans, casseroles and cooking pots where the containers have a projecting element for attaching the handle.

At this projecting element there is a device which can be used to obtain information about the temperature of the container.

This device can comprise a tab-shaped thermo-chromatic sensor attached to the projecting element of the container (EP 1726933), a complex electronic device incorporating a microprocessor (US 7112765) or layers of thermo-chromatic pigments that change colour from black (indicating ambient temperature) to red (indicating 150° to 240°C), as described in US2005/0103209; in the latter case the pigments are applied to the projecting element or the flame guard of the container, or to a label close to this or on the handle.

All the documents quoted above refer to devices positioned on the handle or the projecting element of the container while none of these documents make reference to attaching these devices directly to the container rather than to a protuberance or to a handle of the container itself.

It should also be noted that these devices are difficult to see, subject to wear and can be complex and expensive. The purpose of the present invention is to overcome these drawbacks by providing a container for food where the temperature is indicated in a simple, reliable and cost-effective manner in a position clearly visible to the user.

The purpose of the present invention is to provide a container having a type of safety device which warns the user when the container is too hot and at the same time provides an indication that the container is in an optimum condition for the start of cooking.

This purpose is fully achieved by the container and the procedure described in the present invention and characterised in the claims below.

In particular the container comprises on its upper edge:
- a first layer of pigment or paint;
- a second layer of thermo-chromatic pigment or paint on top of the first layer and where the second layer is of a type that becomes transparent allowing the colour of the first layer underneath to be seen whenever the temperature of the edge exceeds a preset threshold.

In a preferred embodiment the colours of the first and second layers are different from the colours of the container and the container has a third protective layer which is also transparent.

The procedure comprises the following steps:
- application of a first layer of pigment or paint on the upper edge of the container;
- passivation and, where required, stoving;
- application of a second layer of thermo-chromatic pigment or paint on top of the first layer where the second layer is of a type that becomes transparent allowing the colour of the first layer below to be seen whenever the temperature of the edge exceeds a preset threshold;
- passivation and, where required, stoving;
- application, where required, of a third protective layer of pigment or paint on top of the second layer followed by passivation and, where necessary, stoving of the third layer.

These and other characteristics are illustrated in greater detail in the description and drawings of a preferred embodiment which follow below. This embodiment is provided as an example only and is in no way limiting. The drawings are as follows:

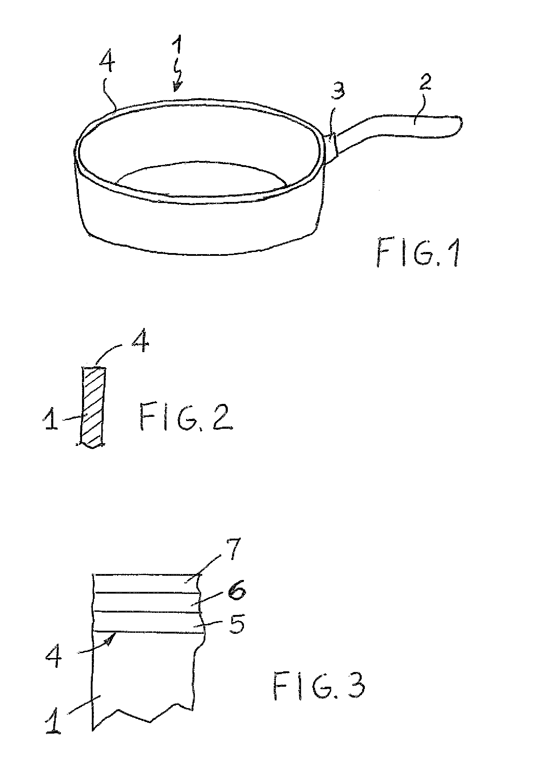

- Figure 1 shows a perspective drawing of the container;
- Figure 2 shows a cross-section of part of the container side wall;
- Figure 3 shows a detailed view of the layers of paint.

The numeral 1 in the figures denotes in its entirety a container for food such as a frying pan, a casserole, a cooking pot or similar container.

The container 1 of a known type can be equipped with a handle 2 attached to the container by means of a projecting element 3 on the container covered with a heat-resistant material (flame guard) to prevent the handle from burning when the container is placed on the kitchen cooker.

The top part of the container 1 terminates in a flat, circular edge 4 lying on a substantially horizontal plane having a thickness of at least 2 mm but preferably a thickness between 2 and 10 mm.

This edge 4 is initially covered with a first layer 5 of paint or pigment, preferably coloured red or with a base colour which is preferably different from the colour of the inside and outside surfaces of the container body.

A second layer 6 of paint or pigment is applied to the first layer 5, this second layer being preferably coloured green but in any case of a different colour to the first layer and preferably different from the colour of the inside and outside surfaces of the container body. The second layer 6 entirely covers the first layer 5 hiding it from the user's view.

The second layer 6 originally comprises a thermo-chromatic pigment or paint which when the temperature exceeds approximately 70° becomes transparent allowing the first layer underneath to be seen.

In practice, at ambient temperature the edge 4 has the colour green or, in any case, the colour of the second layer 6.

When the container is placed on the cooker and heated to the point where the container edge 4 reaches a temperature of approximately 70°C, the user will note that the green edge of the container suddenly becomes red, in effect the second layer 6 becomes transparent so that the first layer 5 can be seen.

When the temperature drops below the threshold of approximately 70°C, the edge 4 becomes green again because the second layer 6 loses its transparency thereby returning to its original colour.

To prevent the second surface layer 6 from wearing out it is possible to apply a third protective layer 7 of transparent paint or pigment to facilitate washing in a dishwasher.

The procedure for manufacturing the container and applying the layers consists of the following steps:
- press forming of the container from an aluminium disc;
- application of a first layer of pigment or paint on the upper flat edge of the container by means of tampography, serigraphy or impregnated rollers, facilitated by the fact that the edge 4 of the container is a flat surface on the horizontal plane;
- passivation and, where necessary, stoving;
- application of a second layer of thermo-chromatic pigment or paint onto the first layer;
- passivation and, where necessary, stoving;
- application, where required, of a third layer of protective pigment or paint on top of the second layer followed by passivation and, where necessary, stoving.

## Claims

1. A container for cooking food **characterised in that** the container comprises on its upper edge (4):
- a first layer (5) of pigment or paint;
- a second layer (6) of thermo-chromatic pigment or paint on top of the first layer (5) where the second layer is of a type that becomes transparent allowing the colour of the first layer (5) underneath to be seen whenever temperature of the edge (4) exceeds a preset threshold.

2. A container according to claim 1 wherein the first layer (5) is a different colour to the inside and outside colour of the container.

3. A container according to claim 1 wherein the second layer (6) is a different colour to the inside and outside colour of the container.

4. A container according to claim 1 wherein the temperature threshold value is approximately 70°C.

5. A container according to claim 1 wherein a third layer (7) of transparent, protective pigment or paint is applied over the second layer (6).

6. A container according to claim 1 wherein the edge (4) is a flat edge.

7. A container according to claim 1 wherein the edge (4) has a thickness between 2 and 10 mm.

8. A procedure for manufacturing means for checking the temperature of the container for cooking food, **characterised in that** the procedure comprises the following steps:
- application of a first layer (5) of pigment or paint on the upper edge (4) of the container;
- passivation and, where necessary, stoving;
- application of a second layer (6) of thermo-chromatic pigment or paint on the first layer where the second layer is of a type that becomes transparent allowing the colour of the first layer (5) underneath to be seen whenever temperature of the edge (4) exceeds a preset threshold;
- passivation and, where necessary, stoving;
- application, where required, of a third layer (7) of protective pigment or paint on top of the second layer (6) followed by passivation and, where necessary, stoving.

9. Procedure according to claim 8 wherein the layers (5, 6, 7) are applied by means of impregnated rollers.

## Amended claims

### Amended claims in accordance with Rule 137(2) EPC.

**1.** A container for cooking food the container comprising
- a first layer (5) of pigment or paint;
- a second layer (6) of thermo-chromatic pigment or paint on top of the first layer (5) where the second layer is of a type that becomes transparent allowing the colour of the first layer (5) underneath to be seen whenever temperature of the edge (4) exceeds a preset threshold, **characterised in that** the first layer (5) and the second layer (6) of pigment are applied only on a flat upper edge (4) lying on a substantially horizontal plane.

**2.** A container according to claim 1 wherein the first layer (5) is a different colour to the inside and outside colour of the container.

**3.** A container according to claim 1 wherein the second layer (6) is a different colour to the inside and outside colour of the container.

**4.** A container according to claim 1 wherein the temperature threshold value is approximately 70°C.

**5.** A container according to claim 1 wherein a third layer (7) of transparent, protective pigment or paint is applied over the second layer (6).

**6.** A container according to claim 1 wherein the edge (4) is a circular edge.

**7.** A container according to claim 1 wherein the edge (4) has a thickness between 2 and 10 mm.

**8.** A procedure for manufacturing means for checking the temperature of the container for cooking food, **characterised in that** the procedure comprises the following steps:
- application of a first layer (5) of pigment or paint only on the flat upper edge (4) lying on a substantially horizontal plane of the container;
- passivation and, where necessary, stoving;
- application of a second layer (6) of thermo-chromatic pigment or paint on the first layer where the second layer is of a type that becomes transparent allowing the colour of the first layer (5) underneath to be seen whenever temperature of the edge (4) exceeds a preset threshold;
- passivation and, where necessary, stoving;
- application, where required, of a third layer (7) of protective pigment or paint on top of the second layer (6) followed by passivation and, where necessary, stoving.

**9.** Procedure according to claim 8 wherein the layers (5, 6, 7) are applied by means of impregnated rollers.
